# EUROPÄISCHE PATENTANMELDUNG

(11) **EP 1 284 269 A2**
(43) Veröffentlichungstag der Anmeldung: **19.02.2003**
(21) Anmeldenummer: 02016985.0
(22) Anmeldetag: 05.08.2002
(51) Int. Cl.: C07F 9/00, C08F 10/00

(54) **Vanadium-Imidoaryl-Komplexe für die Olefinpolymerisation**

(30) Priorität: 16.08.2001 DE 10140135
(71) Anmelder: BAYER AG, 51368 Leverkusen (DE)
(72) Erfinder: Arndt-Rosenau, Michael, 41539 Dormagen (DE); Hoch, Martin, 52525 Heinsberg (DE); Sundermeyer, Jörg, 35041 Marburg (DE); Kipke, Jennifer, 68167 Mannheim (DE); Xiaoyan, Li, Institute Organic Chemistry, Shandong University, Jinan 250100 (CN)

(57) **Zusammenfassung**

Die vorliegende Erfindung betrifft Vanadium-Imidoaryl-Verbindungen mit elektronenziehenden Substituenten an der Arylgruppe, Zusammensetzungen enthaltend Vanadium-Imidoaryl-Verbindungen mit elektronenziehenden Substituenten an der Arylgruppe, welche sich insbesondere als Katalysatoren eignen für die Polymerisation von Olefinen, insbesondere die Ethen/Propen bzw. Ethen/α-Olefin Copolymerisation und die Terpolymerisation dieser Monomere mit Dienen.

## Beschreibung

Die vorliegende Erfindung betrifft Vanadium-Imidoaryl-Verbindungen mit elektronenziehenden Substituenten an der Arylgruppe, sowie Zusammensetzungen enthaltend Vanadium-Imidoaryl-Verbindungen mit elektronenziehenden Substituenten an der Arylgruppe, welche sich insbesondere als Katalysatoren eignen für die Polymerisation von Olefinen, insbesondere die Ethen/Propen bzw. Ethen/α-Olefin Copolymerisation und die Terpolymerisation dieser Monomere mit Dienen.

EP-A2- 0 518 415 beschreibt Vanadium-Imidoaryl-Komplexe und deren Verwendung für die Herstellung von EPDM, wobei ein im Vergleich zu Katalysatoren auf Basis von VOCl₃ verbesserter Einbau von Dien erzielt wird. Diese Katalysatoren weisen jedoch im Vergleich zu VOCl₃ deutlich niedrigere Aktivitäten auf.

EP-A1- 0 532 098 beschreibt Vanadium-Imidoaryl-Komplexe, die in den ortho-Positionen der Aryl-Gruppe substituiert sind und deren Verwendung als Katalysatoren für die Polymerisation von Olefinen bei niedrigen Al/V-Verhältnissen. Als besonders günstig werden Alkylsubstituenten beschrieben. Bei hohen Al/V-Verhältnissen werden im Vergleich zu Katalysatoren auf Basis von VOCl₃ identische Produkte mit leicht abgesenkten Katalysatoraktivitäten erhalten.

WO-94/14854-A1 beschreibt Vanadium-Imidoaryl-Amide als Katalysatoren mit hoher Aktivität für die EPDM-Herstellung, wobei wiederum vorzugsweise eine Dialkyl-substituierte Aryl-Gruppe im Imid verwendet wird.

Es wurde überraschenderweise gefunden, dass elektronenziehende Substituenten an der Arylgruppe von Vanadium-Imidoaryl-Komplexen zu Katalysatoren mit, im Vergleich zu o,o'-Dialkyl-substituierten Vanadium-Imidoarylen, deutlich gesteigerten Aktivitäten führen. Hochaktive Katalysatoren ermöglichen die Herstellung von Polymeren mit geringeren Katalysatorrückständen, so können aufwendige Wasch- und Reinigungsschritte vermieden werden.

Gegenstand der Erfindung sind daher Vanadium-Imidoaryl-Verbindungen mit elektronenziehenden Substituenten an der Arylgruppe.

Bevorzugte Vanadium-Imidoaryl-Verbindungen mit elektronenziehenden Substituenten an der Arylgruppe entsprechen der allgemeinen Formel R-N=VCl₃ (I) oder R-N=VXYZ (II),
wobei R für eine einen oder mehrere elektronenziehenden Substituenten tragende Arylgruppe steht,
wobei X,Y,Z unabhängig voneinander verschiedene oder gleichartige monoanionische Liganden sind, die miteinander und/oder mit der Arylgruppe des Imids, bzw. dessen Substituenten verbunden sein können.

Die Arylgruppe R zeichnet sich dadurch aus, dass sie einen oder mehrere elektronenziehende Substituenten trägt. Neben diesen Substituenten kann die Arylgruppe selbstverständlich weitere Substituenten tragen. Bevorzugt ist R eine C₆-C₁₄-Arylgruppe.

Unter C₆-C₁₄-Aryl werden sämtliche dem Fachmann bekannte ein- oder mehrkernige Arylreste mit 6 bis 14 C-Atomen verstanden, wie Phenyl, Naphthyl, Fluorenyl, darüber hinaus kann die Arylgruppe weitere Substituenten tragen. Als Substituenten kommen hierbei Wasserstoff, Halogen, Nitro, C₁-C₁₀-Alkoxy oder auch C₁-C₁₀-Alkyl, sowie C₆-C₁₄-Cycloalkyl oder -Aryl in Frage, wie Bromphenyl, Chlorphenyl, Toloyl und Nitrophenyl.

Unter C₁-C₁₀-Alkoxy- werden sämtliche dem Fachmann bekannte lineare oder verzweigte Alkoxyreste mit 1 bis 10 C-Atomen verstanden, wie Methoxy-, Ethoxy-, n-Propoxy-, i-Propoxy-, n-Butoxy-, i-Butoxy-, t-Butoxy-, n-Pentoxy-, i-Pentoxy-, neo-Pentoxy- und Hexoxy-, Heptoxy-, Oktoxy-, Nonoxy- und Decoxy-, die ihrerseits wiederum substituiert sein können.

Unter C₁-C₁₀-Alkyl werden sämtliche dem Fachmann bekannte lineare oder verzweigte Alkylreste mit 1 bis 10 C-Atomen verstanden, wie Methyl, Ethyl, n-Propyl, i-Propyl, n-Butyl, i-Butyl, t-Butyl, n-Pentyl, i-Pentyl, neo-Pentyl und Hexyl, Heptyl, Oktyl, Nonyl und Decyl, die ihrerseits wiederum substituiert sein können. Als Substituenten kommen hierbei Wasserstoff, Halogen, Nitro, Hydroxyl, oder auch C₁-C₁₀-Alkyl, sowie C₆-C₁₄-Cycloalkyl oder -Aryl in Frage, wie Benzoyl, Trimethylphenyl, Ethylphenyl, Chlormethyl, Chlorethyl und Nitromethyl.

Unter C₆-C₁₄- Cycloalkyl werden sämtliche dem Fachmann bekannte ein- oder mehrkernige Cycloalkylreste mit 6 bis 14 C-Atomen verstanden, wie Cyclohexyl, Cycloheptyl, Cyclooctyl und Cyclononyl oder auch teil- oder vollhydriertes Fluorenyl, die ihrerseits wiederum substituiert sein können. Als Substituenten kommen hierbei Wasserstoff, Halogen, Nitro, C₁-C₁₀-Alkoxy oder auch C₁-C₁₀-Alkyl, sowie C₆-C₁₂-Cycloalkyl oder -Aryl in Frage, wie Methylcyclohexyl, Chlorcyclohexyl und Nitrocyclohexyl.

Als elektronenziehende Substituenten kommen sämtliche dem Fachmann bekannten Gruppen in Frage, die die Elektronendichte der Arylgruppe erniedrigen, wie Halogen-, halogenierte Alkylgruppen, Nitro-, Cyano-, Carbonyl- und Carboxylgruppen.

Bevorzugt werden Halogen- und perhalogenierte Alkylgruppen als elektronenziehende Substituenten eingesetzt. Besonders bevorzugt sind Chlor-, Brom- und Iod Substituenten.

Bevorzugt sind Verbindungen, die elektronenziehenden Substituenten in ortho und/oder para Stellung zur Imido-Gruppe tragen. Besonders bevorzugt sind o,o- und o,o,p-substituierte Arylgruppen.

Wie bereits gesagt können die monoanionischen Liganden auch in Form chelatisierender Liganden miteinander und/oder mit dem Imid verbunden sein.

Es ist selbstverständlich auch möglich weitere Neutralliganden, wie zum Beispiel Tetrahydrofuran, 1.2-Dimethoxyethan, Phosphine, Diphosphine, Imine, Diimine, in die Ligandenstruktur der Vanadium-Imidoaryl-Verbindung einzubringen. Diese Verbindungen mit Neutralliganden sind in der vorliegenden Erfindung ausdrücklich mit umfasst.

Bevorzuge monoanionische Liganden sind Halogen-, C₁-C₁₀-Alkoxy-, C₆-C₁₄-Aryloxy- und Amido-Gruppen. Besonders bevorzugt sind Halogen und C₁-C₁₄-Aryloxy-Gruppen.

Bevorzugte Strukturen der erfindungsgemäßen Vanadium-Imidoaryl-Verbindungen mit elektronenziehenden Substituenten an der Arylgruppe sind: 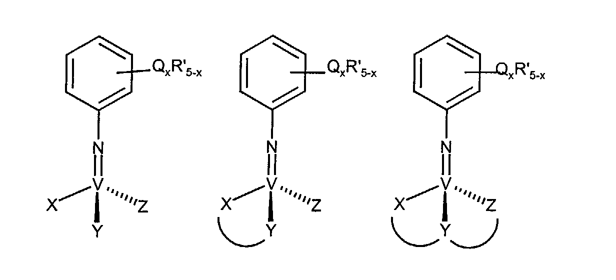 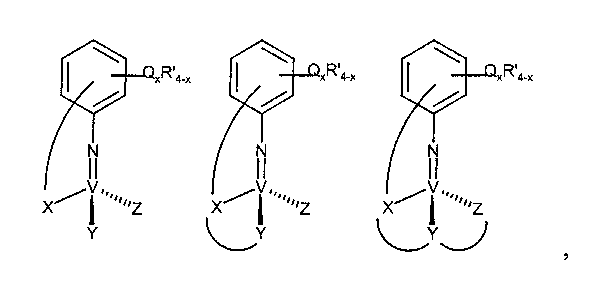 wobei Q für besagte elektronenziehende(n) Gruppe(n) und R' weitere Substituenten der Arylgruppe darstellen, die wie bereits gesagt ausgewählt werden aus der Gruppe bestehend aus Wasserstoff, Halogen-, Nitro-, C₁-C₁₀-Alkoxy- oder auch C₁-C₁₀-Alkyl-, sowie C₆-C₁₄-Cycloalkyl oder C₆-C₁₄-Aryl.

Ein weiterer Gegenstand der Erfindung sind Zusammensetzungen enthaltend Vanadium-Imidoaryl-Verbindungen mit elektronenziehenden Substituenten an der Arylgruppe und eine organo-metallische Verbindung der Gruppen 1, 2, 12 oder 13 des Periodensystems der Elemente gemäss IUPAC 1985, wobei mindestens eine Kohlenwasserstoffgruppe hierbei direkt über ein Kohlenstoffatom an das Metallatom gebunden ist.

Bevorzugte organo-metallische Verbindungen sind Verbindungen des Aluminiums, Natriums, Lithiums, Zink und Magnesiums. Besonders bevorzugt sind solche des Aluminiums.

Die Kohlenwasserstoffgruppe, die an das Metallatom gebunden ist vorzugsweise eine C₁-C₁₀-Alkylgruppe. Beispiele sind Amylnatrium, Butyllithium, Diethylzink, Butylmagnesiumchlorid, Dibutylmagnesium. Als Aluminiumverbindungen kommen insbesondere Trialkylalumiumverbindungen, Alkylaluminiumhydride, wie zum Beispiel Diisobutylalumiumhydrid, Alkylalkoxyalumiumverbindungen, Alkylaryloxyaluminiumverbindungen, Aluminoxane und halogenhaltige Aluminiumverbindungen, wie zum Beispiel Diethylaluminiumchlorid, Diisobutylaluminiumchlorid, Ethylaluminiumchlorid oder Ethylalumiuniumsequichlorid in Frage. Darüber hinaus können Mischungen dieser Komponenten eingesetzt werden.

Das Mol-Verhältnis zwischen organometallischer Verbindung und Vanadium kann in weiten Bereichen variiert werden. Im allgemeinen wird es im Bereich von 1 zu 1 bis 5000 zu 1 variieren. Bevorzugt ist der Bereich zwischen 1 zu 1 und 500 zu 1. Besonders bevorzugt der Bereich zwischen 2 zu 1 und 100 zu 1.

Die Zusammensetzung eignet sich als Katalysator. Diese Verwendung ist ein weiterer Gegenstand der Erfindung. Insbesondere eignet sich die Verbindung als Katalysator für die Polymerisation von Olefinen, insbesondere die Ethen/Propen bzw. Ethen/α-Olefin Copolymerisation und die Terpolymerisation dieser Monomere mit Dienen.

Der Katalysator kann durch dem Fachmann bekannte Zusätze modifiziert werden, welche die Produktivität des Katalysators steigern und/oder die Eigenschaften des erhaltenen Polymers verändern.

Als aktivitätssteigernde Zusätze werden bevorzugt halogenhaltige Verbindungen, insbesondere halogenhaltige Kohlenwasserstoffe eingesetzt. Besagte Kohlenwasserstoffe können weitere Heteroatome, wie Sauerstoff, Stickstoff, Phosphor und Schwefel enthalten. Besonders bevorzugt sind Verbindungen, die wenig Halogen (1 bis 2 Atome pro Molekül) enthalten, da so die Halogenkonzentration im Polymer niedrig gehalten werden kann. Ganz besonders bevorzugt sind Alkyl- und Alkoxyalkylester der Phenylmono- und Dichloressigsäure, sowie der Diphenylchloressigsäure.

Als aktivitätssteigernde Zusätze kommen darüber hinaus Lewis Säuren, wie zum Beispiel AlCl₃, BCl₃ oder SiCl₄ in Frage oder Lewis Basen, wie Ester, Amine, Ammoniak, Ketone, Alkohole, Ether.

Ausdrücklich werden auch Mischungen der genannten aktivitätssteigernden Zusätze genannt.

Es kann vorteilhaft sein, das erfindungsgemäße Katalysatorsystem auf einen Träger aufzubringen.

Als Trägermaterialien werden bevorzugt teilchenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt gemäss DIN 66 131, das Porenvolumen durch die Zentrifugationsmethode nach McDaniel, *J. Colloid Interface Sci.* 1980, *78,* 31 und die Teilchengröße nach Cornillaut, *Appl. Opt.* 1972, *11*, 265.

Als geeignete anorganische Feststoffe seien beispielsweise genannt: Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439 ff (Silicagele), Band 23, S. 311 ff (Tone), Band 14, S. 633 ff (Ruße) und Band 24, S. 575 ff (Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie beispielsweise Polyethen, Polypropen, Polystyrol, Polystyrol-*co*-divinylbenzol, Polybutadien, Polyether, wie beispielsweise Polyethylenoxid, Polyoxytetramethylen oder Polysulfide, wie beispielsweise Poly-*p*-phenylensulfid. Besonders geeignete Materialien sind Polypropylen, Polystyrol oder Polystyrol-*co*-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195 ff (Polypropylen), und Band 19, S. 265 ff (Polystyrol).

Die Herstellung des geträgerten Katalysatorsystems kann in einem weiten Temperaturbereich erfolgen. Im allgemeinen liegt die Temperatur zwischen Schmelz- und Siedepunkt des inerten Lösungsmittelgemisches. Üblicherweise wird bei Temperaturen von -50 bis +200°C, bevorzugt -20 bis 100°C, besonders bevorzugt 20 bis 60°C, gearbeitet.

Die Erfindung betrifft weiterhin ein Verfahren zur Homo- oder Co-Polymerisation von Olefinen, bevorzugt Ethen, Propen, Isobuten, 1-Buten, 2-Buten, 1-Hexen, 1-Octen, 4-Methyl-1-penten, ungesättigten alicyclischen Verbindungen wie z.B. Cyclopenten, Norbornen, sowie ein Verfahren zur Co-Polymerisation dieser Monomere mit einem oder mehreren Dienen, bevorzugt Ethylidennorbornen, Vinylnorbornen, Dicyclopentadien, 1,4-Hexadien. Die Erfindung betrifft des weiteren ein Verfahren zur Homo- und Copolymerisation von konjugierten Dienen wie Butadien und Isopren sowie deren Copolymerisation mit Olefinen, alicyclischen Olefinen, Styrol und Styrolderivaten, sowie polaren Vinylmonomeren, wie z.B. Acrylnitril, Methylacrylat, Butylacrylat, Methylmethacrylat.

Die Polymerisation erfolgt bevorzugt indem man die Olefine mit dem erfindungsgemäßen Katalysatorsystem gelöst in geeigneten Lösungsmitteln, gasförmig, flüssig in feiner Verteilung oder suspendiert in flüssigem Verdünnungsmittel in Berührung bringt. Hierbei werden die Katalysatoren in der Regel in Mengen im Bereich von 10⁻¹⁰ bis 10⁻¹ mol% pro Mol Monomer eingesetzt.

Den gasförmigen, flüssigen oder versprühten Monomeren können weitere Gase oder fein verteilte Flüssigkeiten zugemischt werden, die entweder der Verdünnung, der Versprühung oder der Wärmeabführung dienen.

Die nachfolgenden Beispiele sollen die vorliegende Erfindung sowie die Durchführung damit katalysierter Homo- und Copolymerisationsverfahren darstellen.

### Beispiele:

Alle im Folgenden aufgeführten Synthesen wurden unter Ar-Atmosphäre ausgeführt.

Alle verwendeten Chemikalien sind, wenn nicht anders beschrieben, Handelsprodukte der Firmen Acros, Aldrich, Arocado, Fluka oder Merck-Schuchardt. Dichlorphenylessigsäureester wurde nach Literaturvorschrift (EP 75 355, Seite 3, Example II) synthetisiert.

### Beispiel 1

### Synthese von (2,6-iPr₂Ph)-N=V-O-(2,6-iPr₂Ph)Cl₂ (Vergleichsbeispiel)

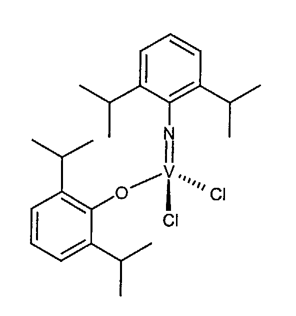

(2,6-iPr₂Ph)-N=VCl₃ wird wie folgt hergestellt:

Zu 12,95 g (57,95 mmol) 2,6-Diisopropylphenylsulfinylamin in 40ml Oktan werden bei Raumtemperatur langsam 9,13 g (52,70 mmol) VOCl₃ in 20 ml Oktan getropft, wobei eine spontane Rotfärbung zu beobachten ist. Anschließend wird das Reaktionsgemisch 3 h unter Rückfluss gekocht, wobei sich die Lösung tiefgrün verfärbt. Anschließend werden die flüchtigen Bestandteile im Vakuum entfernt, der Rückstand zweimal mit je 20 ml Pentan digeriert und 24h bei -80°C aufbewahrt. Pentanlösliche Anteile werden abgetrennt und verworfen, der verbleibende Feststoff wird im Vakuum getrocknet.
Ausbeute 16,83g (96 %)
C: 44.64 (calc. 43.34); H: 5.47 (calc. 5.15); N: 4.50 (calc. 4.21)
¹H-NMR (200 MHz, C₆D₆): 1.16 (d, 12H, CH(CH₃)₂), 4.32 (sep, 2H, CH(CH₃)₂), 6.60-6.68 (m,3H, H_{Arom}) ppm
¹³C-NMR (50 MHz, C₆D₆): 24.0 (CH(CH₃)₂), 29.3 (CH(CH₃)₂), 122.8 (C_{Arom-meta}), 128.5 (C_{Arom-para}), 132.7 (C_{Arom-ortho}), 151.6 (=N-C_{Arom}) ppm.
51 V-NMr (105 MHz, C₆D₆): 392 ppm.

Zu einer Lösung von (2,6-iPr₂Ph)-N=VCl₃ (505 mg/1.581 mmol, 40 ml Hexan) wird bei -30°C 2,6- Diisopropylphenol (279 mg/1,565 mmol) tropfenweise gegeben. Die Lösung verfärbt sich sofort dunkelbraun. Nach 15 h Rühren bei Raumtemperatur wird die dunkelrote Lösung im Vak. getrocknet. Der Rückstand wird in 20 ml Pentan aufgenommen. Bei -80°C fällt das Produkt als rotes Wachs aus. Die Verbindung ist bei Raumtemperatur ein rotes Öl.
Ausbeute: 660 mg (92%)
¹H-NMR (300 MHz, CDCl₃): 1.02 (d, 12H, ³J(HH) = 6.6 Hz, CH(CH₃)₂), 1.08 (d, 12H, ³J(HH) = 6.90 Hz, CH(CH₃)₂), 3.19 (sep, 2H, ³J(HH) = 6.90 Hz, CH(CH₃)₂), 3.62 (sep, 2H, ³J(HH) = 6.90 Hz, CH(CH₃)₂), 6.86-7.64 (m, 6H, Hₐᵣₒₘ).
¹³C-NMR (75.5 MHz, CDCl₃): 22.5, 22.8 (CH(CH₃)₂), 26,4, 27.9 ( CH(CH₃)₂), 121.4, 122.2, 122.4, 123.4, 125.2, 129.4, 135.5 (Cₐᵣₒₘ).

### Beispiel 2

### Synthese von (2,6-iPr₂Ph)-N=V-O-(2,4,6-I₃Ph)Cl₂ (Vergleichsbeispiel)

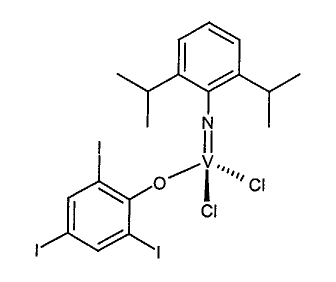

(2,6-iPr₂Ph)-N=VCl₃ wird wie in Beispiel 1 hergestellt.

Zu einem Gemisch von (2,6-iPr₂Ph)-N=VCl₃ (1.423 g/4.278 mmol) und 2,4,6-Triiodphenol (2.020 g/4.278 mmol) wird bei -30°C 80 ml Hexan gegeben. Die Reaktionsmischung wird bei Raumtemperatur 15 h gerührt. Dazwischen beobachtet man keine deutliche Farbveränderung. Nach dem Abziehen des Lösungsmittels erhält man einen dunkelroten Rückstand. Der Rückstand wird in Hexan aufgenommen. Bei -80°C fällt das Produkt als dunkelroter Feststoff aus.
Ausbeute: 2.70 g (82%)
¹H-NMR (300 MHz, CDCl₃): 1.11 (d, 12H, ³J(HH) = 6.60 Hz, CH(CH₃)₂), 3.70 (sep, 2H, ³J(HH) = 6.60 Hz, CH(CH₃)₂), 6.95 (m, 3H, NAr-H), 8.03 (s, 2H OAr-H).

### Beispiel 3

### Synthese von (2,4,6-Cl₃Ph)-N=VCl₃

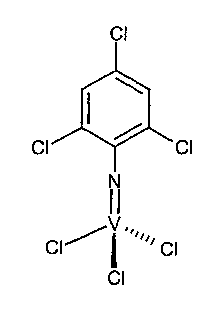

Zu 6.64g (27.4 mmol) 2,4,6-Trichlorphenylsulfinylamin (Synthese nach A. Meller et al., Chem. Ber. 113 (1980), 1950-1961, nach S. 1954, Methode A) in 40 ml Toluol werden bei Raumtemperatur 3.65g (2ml, 21.1 mmol) VOCl₃ in 20ml Toluol getropft. Das Reaktionsgemisch färbt sich spontan dunkelgrün. Nach 30min. Rühren werden flüchtige Bestandteile im Vakuum entfernt, der Rückstand dreimal mit je 20ml Pentan digeriert und 24h bei -80°C aufbewahrt. Pentan-unlösliche Anteile werden abfiltriert und das Filtrat für die Gewinnung des Komplexes zur Trockene eingeengt.
Ausbeute 6.3g (85%)
C: 20.79 (ber. 20.49); H: 0.57 (ber. 0.63); N: 4.02 (ber. 3.98)
¹H-NMR (200MHz, C₆D₆): 6.24 (s, 2H, Ar-Hₘₑₜₐ) ppm
¹³C-NMR (50MHz, C₆D₆): 128.3 (Ar-Cₘₑₜₐ), 135.9, 136.7 (Ar-Cₒᵣₜₕₒ+Cₚₐᵣₐ) ppm
⁵¹V-NMR (131 MHz, C₆D₆): 276.6 ppm
IR (Nujol): 1551vs, 1522m, 1512m, 1306m, 1206m, 1190m, 1153s, 1084m, 1063w, 972w, 876w, 858s, 839w, 820s, 806m, 729w, 721w, 710w, 696w, 669w, 611w, 575w, 529w, 484w, 453s cm⁻¹
EI-MS: m/z= 352 (M⁺, 12 %), 196 (C₆H₂Cl₃N⁺, 100 %), 158 (VCl₃⁺, 28 %)

### Beispiel 4

### Synthese von (2,4,6-Cl₃Ph)-N=V-O-(2,6-iPr₂Ph)Cl₂

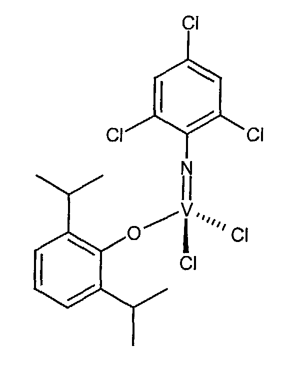

Zu einer Lösung von (2,4,6-Cl₃Ph)-N=VCl₃ (1.887 g/5.367 mmol in 60 ml Hexan) wird bei -30°C 2,6- Diisopropylphenol (0.956 g/5.362 mmol) tropfenweise gegeben. Die Lösung verfärbt sich sofort dunkelbraun. Nach 15 h Rühren bei Raumtemperatur wird die dunkelrote Lösung im Vak. getrocknet. Der Rückstand wird in 20 ml Pentan aufgenommen. Bei -80°C fällt das Produkt als rotes Wachs aus. Die Verbindung ist bei Raumtemperatur ein rotes Öl.
Ausbeute: 2.41 g (91 %)
¹H-NMR (300 MHz, CDCl₃): 1.10 (d, 12H, ³J(HH) = 6.60 Hz, CH(CH₃)₂), 3.15 (sep, 2H, ³J(HH) = 6.60 Hz, CH(CH₃)₂), 7.05 (m, 5H, Hₐᵣₒₘ).

### Beispiel 5

### Synthese von (2,4,6-Cl₃Ph)-N=V-O-(2,4,6-I₃Ph)Cl₂

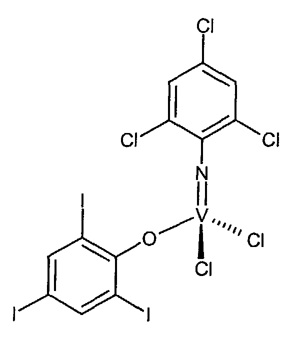

Zu einem Gemisch von (2,4,6-Cl₃Ph)-N=VCl₃ (1.749 g/4.974 mmol) und 2,4,6-Triiodphenol (2.340 g/4.956 mmol) wird bei -30°C 80 ml Hexan gegeben. Die Reaktionsmischung wird bei Raumtemperatur 15 h gerührt. Dazwischen beobachtet man keine deutliche Farbveränderung. Nach dem Abziehen des Lösungsmittels erhält man einen dunkelroten Rückstand. Der Rückstand wird in Hexan aufgenommen. Bei -80°C fällt das Produkt als dunkelroter Feststoff aus.
Ausbeute: 3.05 g (78 %)
¹H-NMR (300 MHz, CDCl₃): 7.14 (m, 2H), 8.00 (m, 2H).

### Beispiel 6

### Ethen/Propen Copolymerisation

Die mit einem Thermostaten auf 40°C temperierte Apparatur wird 30 min auf 5 * 10⁻² evakuiert. Danach wird bis zu einem Druck von 1,5 bar nachgereinigtes Propen aufgepresst. Im Propengegenstrom werden 40 ml absolutiertes Hexan und 0,408 mmol (18,5 eq) einer 15 %igen Lösung von Ethylaluminiumsesquichlorid (Witco) in Heptan in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethyester zu befüllen.

Darauf werden 0,022 mmol (1,0 eq) der in 30 ml Hexan gelösten Vanadiumprecursorverbindung in das Rührgefäß gegeben. Die Hexanlösung wird 15 min mit Propen bei 3,7 bar gesättigt. Nach Verschließen der Propenzufuhr wird der Gesamtdruck mit nachgereinigtem Ethen auf 5,5 bar eingestellt. Die Reaktion findet bei 40°C statt und wird durch Injektion des Reaktivators mit der Druckspritze gestartet. Es wird unter konstantem Ethendruck bei 5,5 bar und mit 1000 U/min mit einen Ankerrührer gerührt.

Nach 10 min wird die Reaktion durch Eintropfen des Gemisches in salzsaures Methanol beendet. Nach Waschen des Polymerniederschlags mit Ethanol wird dieser 10 h bei 50°C getrocknet und die Ausbeute bestimmt.

**Tabelle 1:**

| **Ergebnisse der Ethen/Propen Copolymerisation durch Vanadium-Imidoaryl-Katalysatoren.** | |
|---|---|
| Katalysator | Ausbeute [g] |
| (2,6-iPr₂Ph)-N=VCl₃ | 7.2 |
| (2,4,6-Cl₃Ph)-N=VCl₃ | 9.3 |
| (2,6-iPr₂Ph)-N=V-O-(2,6-iPr₂Ph)Cl₂ | 8.6 |
| (2,4,6-Cl₃Ph)-N=V-O-(2,6-iPr₂Ph)Cl₂ | 10.5 |
| (2,6-iPr₂Ph)-N=V-O-(2,4,6-I₃Ph)Cl₂ | 9.0 |
| (2,4,6-Cl₃Ph)-N=V-O-(2,4,6-I₃Ph)Cl₂ | 10.7 |

Die durchgeführten Versuche zeigen klar, das Vanadium-Imidoaryl-Katalysatoren mit stark elektronenziehenden Gruppen (hier o,o,p-Cl) deutlich bessere katalytische Aktivitäten ergeben.

### Beispiel 7

### EPDM-Synthese

Ein inertisierter Autoklav wird mit 1500ml Hexan und 6.0g Ethylidennorbornen gefüllt und auf die Polymerisationstemperatur von 40°C aufgeheizt. Dann werden Ethen und Propen im Verhältnis 1 : 19 bis zu einem Druck von 7 bar aufgepresst. Die Katalysatorkomponenten (0.05 mmol V-Komponente, 1mmol Ethylaluminiumsequichlorid (Witco) und 0.25 mmol Dichlorphenylessigsäureethylester) werden über Druckbüretten zeitgleich in den Reaktor gegeben und dann wird bei einem Druck von 7.0 bar polymerisiert. Die Regelung erfolgt durch Dosierung von Ethen. Nach einer halben Stunde wird der Versuch beendet und der Ansatz in einen mit Ethanol gefüllten Behälter überführt. Das Polymer wird bei 80°C im Vakuumtrockenschrank getrocknet.

**Tabelle 2:**

| **Ergebnisse der Ethen/Propen/Ethylidennorbornen Terpolymerisation durch Vanadium-Katalysatoren.** | | | | | | | |
|---|---|---|---|---|---|---|---|
| Katalysator | Ausbeute [g] | E [wt%] | P [wt%] | ENB [wt%] | Tg [°C] | M_{w} | M_{w}/Mₙ |
| O=VCl₃ | 25.9 | 46.0 | 44.2 | 9.8 | -46 | 205000 | 2.3 |
| (2,4,6-Cl₃Ph)-N=VCl₃ | 31.3 | 48.3 | 42.0 | 9.7 | -46 | 227000 | 1.9 |

Die Versuche zeigen, daß Vanadium-Imidoaryl-Katalysatoren mit stark elektronenziehenden Gruppen (hier o,o,p-Cl) deutlich produktiver sind und dabei Copolymere mit höheren Molekulargewichten und engerer Molekulargewichtsverteilung liefern als Katalysatoren auf Basis von VOCl₃, wie sie den Stand der Technik darstellen.

Alle im Folgenden aufgeführten Synthesen wurden unter Ar-Atmosphäre ausgeführt.

Ethylaluminiumsesquichlorid (EASC, 15%ige Lsg. in Heptan) und Diethylaluminiumchlorid (DEAC) wurden von der Firma Witco bezogen.

Methylaluminoxan wurde als 30%ige Lösung in Toluol von der Firmas Witco bezogen, vom Lösungsmittel befreit und als Feststoff gelagert. Für die Versuche wurde eine Lösung von 670 mg in 60 ml Toluol hergestellt.

### Beispiel 8 (Vergleichsbeispiel):

### Synthese von (2,6-iPr₂Ph)-N=VCl₃ - Katalysator A

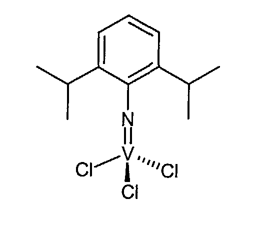

Zu 12,95 g (57,95 mmol) 2,6-Diisopropylphenylsulfinylamin in 40ml Oktan werden bei Raumtemperatur langsam 9,13 g (52,70 mmol) VOCl₃ in 20 ml Oktan getropft, wobei eine spontane Rotfärbung zu beobachten ist. Anschließend wird das Reaktionsgemisch 3 h unter Rückfluss gekocht, wobei sich die Lösung tiefgrün verfärbt. Anschließend werden die flüchtigen Bestandteile im Vakuum entfernt, der Rückstand zweimal mit je 20 ml Pentan digeriert und 24h bei -80°C aufbewahrt. Pentanlösliche Anteile werden abgetrennt und verworfen, der verbleibende Feststoff wird im Vakuum getrocknet.
Ausbeute 16,83g (96 %)
C: 44.64 (calc. 43.34); H: 5.47 (calc. 5.15); N: 4.50 (calc. 4.21)
¹H-NMR (200 MHz, C₆D₆): 1.16 (d, 12H, CH(CH₃)₂), 4.32 (sep, 2H, CH(CH₃)₂), 6.60-6.68 (m,3H, H_{Arom}) ppm
¹³C-NMR (50 MHz, C₆D₆): 24.0 (CH(CH₃)₂), 29.3 (CH(CH₃)₂), 122.8 (C_{Arom-meta}), 128.5 (C_{Arom-para}), 132.7 (C_{Arom-ortho}), 151.6 (=N-C_{Arom}) ppm.
51 V-NMr (105 MHz, C₆D₆): 392 ppm.

### Beispiel 9 (Vergleichsbeispiel):

### Synthese von (2,6-iPr₂Ph)-N=V-O-(2,6-iPr₂Ph)Cl₂ - Katalysator B

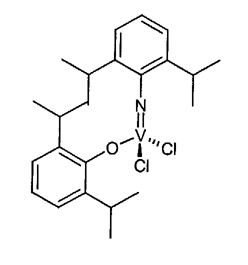

(2,6-iPr₂Ph)-N=VCl₃ wird wie in Beispiel 8 hergestellt.

Zu einer Lösung von (2,6-iPr₂Ph)-N=VCl₃ (505 mg/1.581 mmol, 40 ml Hexan) wird bei -30°C 2,6-Diisopropylphenol (279 mg/1,565 mmol) tropfenweise gegeben. Die Lösung verfärbt sich sofort dunkelbraun. Nach 15 h Rühren bei Raumtemperatur wird die dunkelrote Lösung im Vakuum getrocknet. Der Rückstand wird in 20 ml Pentan aufgenommen. Bei -80°C fällt das Produkt als rotes Wachs aus. Die Verbindung ist bei Raumtemperatur ein rotes Öl.
Ausbeute: 660 mg (92 %)
¹H-NMR (300 MHz, CDCl₃): 1.02 (d, 12H, ³J(HH) = 6.6 Hz, CH(CH₃)₂), 1.08 (d, 12H, ³J(HH) = 6.90 Hz, CH(CH₃)₂), 3.19 (sep, 2H, ³J(HH) = 6.90 Hz, CH(CH₃)₂), 3.62 (sep, 2H, ³J(HH) = 6.90 Hz, CH(CH₃)₂), 6.86-7.64 (m, 6H, Hₐᵣₒₘ).
¹³C-NMR (75.5 MHz, CDCl₃): 22.5, 22.8 (CH(CH₃)₂), 26,4, 27.9 ( CH(CH₃)₂), 121.4, 122.2, 122.4, 123.4, 125.2, 129.4, 135.5 (Cₐᵣₒₘ).

### Beispiel 10 (Vergleichsbeispiel):

### Synthese von (2,6-iPr₂Ph)-N=V-O-(2,4,6-I₃Ph)Cl₂ Katalysator C

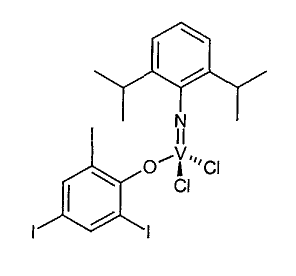

(2,6-iPr₂Ph)-N=VCl₃ wird wie in Beispiel 8 hergestellt.

Zu einem Gemisch von (2,6-iPr₂Ph)-N=VCl₃ (1.423 g/4.278 mmol) und 2,4,6-Triiodphenol (2.020 g/4.278 mmol) werden bei -30°C 80 ml Hexan gegeben. Die Reaktionsmischung wird bei Raumtemperatur 15 h gerührt. Dazwischen beobachtet man keine deutliche Farbveränderung. Nach dem Abziehen des Lösungsmittels erhält man einen dunkelroten Rückstand. Der Rückstand wird in Hexan aufgenommen. Bei -80°C fällt das Produkt als dunkelroter Feststoff aus.
Ausbeute: 2.70 g (82 %)
¹H-NMR (300 MHz, CDCl₃): 1.11 (d, 12H, ³J(HH) = 6.60 Hz, CH(CH₃)₂), 3.70 (sep, 2H, ³J(HH) = 6.60 Hz, CH(CH₃)₂), 6.95 (m, 3H, NAr-H), 8.03 (s, 2H OAr-H).

### Beispiel 11:

### Synthese von (2,4,6-Cl₃Ph)-N=VCl₃ - Katalysator D

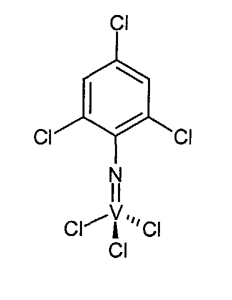

2,4,6-Trichlorphenylsulfinylamin wird gemäß Literaturvorschrift (A. Meller, W. Maringgele, H. Fetzer; Chem. Ber. 113 (1980), 1950-1961 nach S. 1954, Methode A) synthetisiert.

9,82 g 2,4,6-Trichloranilin (0.05 mol) wurden in 20 ml Benzol gelöst, mit 11,9 g SOCl₂ (0.1 mol) bei 25°C versetzt und 6 h refluxiert. Nach Abklingen der HCl Entwicklung (6 h) wurden sämtliche bei 40°C / 10-2 mbar flüchtigen Anteile entfernt. Das zurückbleibende 2,4,6-Trichlorphenylsulfinylamin erstarrt beim Abkühlen auf Raumtemp. zu einer kristallinen Masse. Es wird ohne weitere Charakterisierung eingesetzt.

Zu 6.64 g (27.4 mmol) 2,4,6-Trichlorphenylsulfinylamin in 40 ml Toluol werden bei Raumtemperatur 3.65 g (2 ml, 21.1 mmol) VOCl₃ in 20ml Toluol getropft. Das Reaktionsgemisch färbt sich spontan dunkelgrün. Nach 30min. Rühren werden flüchtige Bestandteile im Vakuum entfernt, der Rückstand dreimal mit je 20 ml Pentan digeriert und 24h bei -80°C aufbewahrt. Pentan-unlösliche Anteile werden abfiltriert und das Filtrat für die Gewinnung des Komplexes zur Trockene eingeengt.
Ausbeute 6.3g (85 %)
C: 20.79 (ber. 20.49); H: 0.57 (ber. 0.57); N: 4.02 (ber. 3.98)
¹H-NMR (200MHz, C₆D₆): 6.24 (s, 2H, Ar-Hₘₑₜₐ) ppm
¹³C-NMR (50MHz, C₆D₆): 128.3 (Ar-Cₘₑₜₐ), 135.9, 136.7 (Ar-Cₒᵣₜₕₒ+Cₚₐᵣₐ) ppm
⁵¹V-NMR (131 MHz, C₆D₆): 276.6 ppm
IR (Nujol): 1551vs, 1522m, 1512m, 1306m, 1206m, 1190m, 1153s, 1084m, 1063w, 972w, 876w, 858s, 839w, 820s, 806m, 729w, 721w, 710w, 696w, 669w, 611w, 575w, 529w, 484w, 453s cm⁻¹
EI-MS: m/z= 352 (M⁺, 12%), 196 (C₆H₂Cl₃N⁺, 100%), 158 (VCl₃⁺, 28%)

### Beispiel 12:

### Synthese von (2,4,6-Cl₃Ph)-N=V-O-(2,6-iPr₂Ph)Cl₂ - Katalysator E

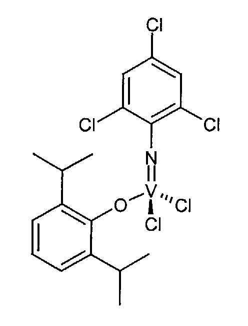

(2,4,6-Cl₃Ph)-N=VCl₃ wird gemäß Beispiel 11 hergestellt. Zu einer Lösung von (2,4,6-Cl₃Ph)-N=VCl₃ (1.887 g/5.367 mmol in 60 ml Hexan) wird bei -30°C 2,6-Diisopropylphenol (0.956 g/5.362 mmol) tropfenweise gegeben. Die Lösung verfärbt sich sofort dunkelbraun. Nach 15 h Rühren bei Raumtemperatur wird die dunkelrote Lösung im Vak. getrocknet. Der Rückstand wird in 20 ml Pentan aufgenommen. Bei -80°C fällt das Produkt als rotes Wachs aus. Die Verbindung ist bei Raumtemperatur ein rotes Öl.
Ausbeute: 2.41 g (91 %)
¹H-NMR (300 MHz, CDCl₃): 1.10 (d, 12H, ³J(HH) = 6.60 Hz, CH(CH₃)₂), 3.15 (sep, 2H, ³J(HH) = 6.60 Hz, CH(CH₃)₂), 7.05 (m, 5H, Hₐᵣₒₘ).

### Beispiel 13:

### Synthese von (2,4,6-Cl₃Ph)-N=V-O-(2,4,6-I₃Ph)Cl₂ - Katalysator F

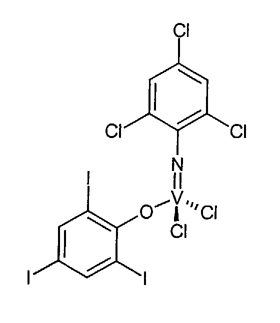

(2,4,6-Cl₃Ph)-N=VCl₃ wird gemäß Beispiel 11 hergestellt. Zu einem Gemisch von (2,4,6-Cl₃Ph)-N=VCl₃ (1.749 g/4.974 mmol) und 2,4,6-Triiodphenol (2.340 g/4.956 mmol) wird bei -30°C 80 ml Hexan gegeben. Die Reaktionsmischung wird bei Raumtemperatur 15 h gerührt. Dazwischen beobachtet man keine deutliche Farbveränderung. Nach dem Abziehen des Lösungsmittels erhält man einen dunkelroten Rückstand. Der Rückstand wird in Hexan aufgenommen. Bei -80°C fällt das Produkt als dunkelroter Feststoff aus.
Ausbeute: 3.05 g (78 %)
¹H-NMR (300 MHz, CDCl₃): 7.14 (m, 2H), 8.00 (m, 2H).

### Beispiel 14:

### Synthese von (2,4,6-Br₃Ph)-N=VCl₃ - Katalysator G

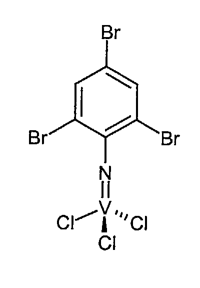

2,4,6-Tribromophenylsulfinylamin wird gemäß Literaturvorschrift (Michaelis; Humme; Chem. Ber. 24 (1891) S. 755, Z. 1; Michaelis; Humme; Justus Liebigs Ann. Chem. 274 (1893) 221 nach Seite 221 ab Zeile 26) hergestellt.

16,49 g 2,4,6-Tribromanilin (0.05 mol) wurden in 20 ml Benzol gelöst, mit 11,9 g SOCl₂ (0,1 mol) bei 25°C versetzt und 6 h refluxiert. Nach Abklingen der HCl Entwicklung (6 h) wurden sämtliche bei 40°C/10-2 mbar flüchtigen Anteile entfernt. Das zurückbleibende 2,4,6-Tribromphenylsulfinylamin erstarrt beim Abkühlen auf Raumtemperatur zu einer kristallinen Masse. Es wird ohne weitere Charakterisierung eingesetzt.

Zu in 100 ml Toluol gelösten 15,03 g (39,99 mmol) 2,4,6-Tribromophenylsulfinylamin wird ein Gemisch aus 3 ml (31,62 mmol) VOCl₃ und 30 ml Toluol getropft. Anschließend wird 8 Stunden unter Rückfluss gekocht. Nach Abziehen des Lösungsmittels wird die Substanz in 250 ml n-Pentan gelöst und über Nacht bei -78°C aufbewahrt. Das Produkt fällt als dunkelgrüner Feststoff aus. Nach dem Filtrieren wird das Produkt in Vakuum getrocknet.
Ausbeute:13.96 g (91 %).
¹H-NMR: (200MHz, CDCl₃): 7.44 (s, 2H, Ar-H) ppm
EI-MS: m/z = 485 (M⁺); 328 (C₆H₂Br₃N⁺, 16 %); 248 (C₆H₂Br₂N⁺, 7 %); 158 (VCl₃⁺,3 %);
36 (Cl⁺, 100 %)

### Beispiel 15:

### Ethen/Propen Copolymerisation

Die mit einem Thermostaten auf 40°C temperierte Apparatur wird 30 min auf 5 * 10⁻² evakuiert. Danach wird bis zu einem Druck von 1,5 bar nachgereinigtes Propen aufgepresst. Im Propengegenstrom werden 40 ml absolutiertes Hexan und 0,408 mmol (18,5 eq) einer 15 %igen Lösung von Ethylaluminiumsesquichlorid in Heptan in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethyester zu befüllen.

Darauf werden 0,022 mmol (1,0 eq) der in 30 ml Hexan gelösten Vanadiumprecursorverbindung in das Rührgefäß gegeben. Die Hexanlösung wird 15 min mit Propen bei 3,7 bar gesättigt. Nach Verschließen der Propenzufuhr wird der Gesamtdruck mit nachgereinigtem Ethen auf 5,5 bar eingestellt. Die Reaktion wird bei 40°C durch Injektion des Reaktivators mit der Druckspritze gestartet. Es wird unter konstantem Ethendruck bei 5,5 bar und mit 1000 U/min mit einen Ankerrührer gerührt.

Nach 10 min wird die Reaktion durch Eintropfen des Gemisches in salzsaures Methanol beendet. Nach Waschen des Polymerniederschlags mit Ethanol wird dieser 10 h bei 50°C getrocknet und die Ausbeute bestimmt.

**Tabelle 3:**

| **Ergebnisse der Ethen/Propen Copolymerisation durch Vanadium-Imidoaryl-Katalysatoren** | |
|---|---|
| Katalysator | Ausbeute [g] |
| VOCl₃ | 7.2 |
| Katalysator A | 6.4 |
| Katalysator D | 8.4 |
| Katalysator G | 9.8 |

Die durchgeführten Versuche zeigen klar, das die Vanadium-Imidoaryl-Katalysatoren D und G mit elektronenziehenden Gruppen am Arylrest (hier o,o,p-Chloro bzw. o,o,p-Bromo) im Gegensatz zu den in EP-A2-0518 415 beschriebenen Komplexen deutlich höhere katalytische Aktivitäten zeigen als VOCl₃. Sie sind ebenfalls aktiver als die in EP-A1-0532 098 und WO-94/148554-A1 beschriebenen Vanadium-Imidoaryl-Katalysatoren mit Alyklsubstituenten, wie der Vergleich der durch Katalysator D und G erhaltenen Polymermenge mit der durch Katalysator A erhaltenen zeigt.

### Beispiel 16:

### Ethen/Propen Copolymerisation I

Die mit einem Thermostaten auf 40°C temperierte Apparatur wird 30 min auf 5 * 10⁻² evakuiert. Danach wird bis zu einem Druck von 1,5 bar nachgereinigtes Propen aufgepresst. Im Propengegenstrom werden 40 ml absolutiertes Hexan und 0,408 mmol (18,5 eq) einer 15 %igen Lösung von Ethylaluminiumsesquichlorid in Heptan in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethyester zu befüllen.

Darauf werden 0,022 mmol (1,0 eq) der in 30 ml Hexan gelösten Vanadiumprecursorverbindung in das Rührgefäß gegeben. Die Hexanlösung wird 15 min mit Propen bei 1,7 bar gesättigt. Nach Verschließen der Propenzufuhr wird der Gesamtdruck mit nachgereinigtem Ethen auf 3,8 bar eingestellt. Die Reaktion wird bei 40°C durch Injektion des Reaktivators mit der Druckspritze gestartet. Es wird unter konstantem Ethendruck bei 3,8 bar und mit 1000 U/min mit einen Ankerrührer gerührt.

Nach 15 min wird die Reaktion durch Eintropfen des Gemisches in salzsaures Methanol beendet. Nach Waschen des Polymerniederschlags mit Ethanol wird dieser 10 h bei 50°C getrocknet und die Ausbeute bestimmt.

**Tabelle 4:**

| **Ergebnisse der Ethen/Propen Copolymerisation durch Vanadium-Imidoaryl-Katalysatoren** | | | | |
|---|---|---|---|---|
| Katalysator | Tmax [°C] | Ausbeute [g] | E [wt%] | P [wt%] |
| Katalysator A | 49 | 7.2 | 75.2 | 24.8 |
| Katalysator B | 51 | 8.6 | 75.4 | 24.6 |
| Katalysator C | 48 | 9.0 | 78.3 | 21.7 |
| Katalysator D | 53 | 9.3 | 72.1 | 27.9 |
| Katalysator E | 52 | 10.5 | 74.9 | 25.1 |
| Katalysator F | 48 | 10.7 | 77.1 | 22.9 |

Der Vergleich der Versuchsergebnisse der Katalysatoren A und D, B und E sowie C und F zeigt klar, das die Vanadium-Imidoaryl-Katalysatoren D,E und F mit stark elektronenziehenden Gruppen (hier o,o,p-Cl) am Arylrest unabhängig von der Struktur der restlichen Substituenten deutlich mehr Polymer ergeben als die in EP-A1-0523 098 und WO-94/14854-A1 beschriebenen alkyl-substituierten Analoga A, B und C.

### Beispiel 17:

### Ethen/Propen Copolymerisation

Die mit einem Thermostaten auf 40°C temperierte Apparatur wird 30 min auf 5 * 10⁻² evakuiert. Danach wird bis zu einem Druck von 1,5 bar nachgereinigtes Propen aufgepresst. Im Propengegenstrom werden 40 ml absolutiertes Hexan und 18,8 Äquivalente des Cokatalysators in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethyester zu befüllen.

Darauf werden 0,022 mmol (1,0 eq) des in 30 ml Hexan gelösten Katalysators D - (2,4,6-Cl₃Ph)-N=VCl₃ in das Rührgefäß gegeben. Die Hexanlösung wird 15 min mit Propen bei 3,7 bar gesättigt. Nach Verschließen der Propenzufuhr wird der Gesamtdruck mit nachgereinigtem Ethen auf 5,5 bar eingestellt. Die Reaktion wird bei 40°C durch Injektion des Reaktivators mit der Druckspritze gestartet. Es wird unter konstantem Ethendruck bei 5,5 bar und mit 1000 U/min mit einen Ankerrührer gerührt.

Nach 10 min wird die Reaktion durch Eintropfen des Gemisches in salzsaures Methanol beendet. Nach Waschen des Polymerniederschlags mit Ethanol wird dieser 10 h bei 50°C getrocknet und die Ausbeute bestimmt.

**Tabelle 5:**

| **Ergebnisse der Ethen/Propen Copolymerisation durch Katalysator D = (2,4,6-Cl**_{**3**}**Ph)-N=VCl**_{**3**} **in Verbindung mit verschiedenen Cokatalysatoren** | |
|---|---|
| CoKatalysator | Ausbeute [g] |
| Methylaluminoxan | 1.50 |
| Diethylaluminiumchlorid | 6.50 |
| Ethylaluminiumsequichlorid | 8.40 |

Die durchgeführten Versuche zeigen, daß Vanadium-Imidoaryl-Katalysatoren wie Katalysator D mit stark elektronenziehenden Gruppen (hier o,o,p-Cl) durch verschiedene Cokatalysatoren aktiviert werden können.

### Beispiel 18:

### EPDM-Synthese

Ein inertisierter Autoklav wird mit 1500ml Hexan und 6.0g Ethylidennorbornen gefüllt und auf die Polymerisationstemperatur von 40°C aufgeheizt. Dann werden Ethen und Propen im Verhältnis 1 : 19 bis zu einem Druck von 7 bar aufgepreßt. Die Katalysatorkomponenten (0.05 mmol V-Komponente, 1mmol Ethylaluminiumsequichlorid und 0.25 mmol Dichlorphenylessigsäureethylester) werden über Druckbüretten zeitgleich in den Reaktor gegeben und dann wird bei einem Druck von 7.0 bar polymerisiert. Die Regelung erfolgt durch Dosierung von Ethen. Nach einer halben Stunde wird der Versuch beendet und der Ansatz in einen mit Ethanol gefüllten Behälter überführt. Das Polymer wird bei 80°C im Vakuumtrockenschrank getrocknet.

**Tabelle 6:**

| **Ergebnisse der Ethen/Propen/Ethylidennorbornen Terpolymerisation durch Vanadium-Katalysatoren** | | | | | | | | |
|---|---|---|---|---|---|---|---|---|
| Katalysator | Ausbeute [g] | E [wt%] | P [wt%] | ENB [wt%] | Tg [°C] | M_{w} | Mₙ | M_{w}/Mₙ |
| VOCl₃ | 25.9 | 46 | 44.2 | 9.8 | -46 | 205000 | 89000 | 2.3 |
| Katalysator A | 29.4 | 44.1 | 45.8 | 10.1 | -47 | 284000 | 142000 | 2.0 |
| Katalysator B | 36.3 | 48.8 | 41.3 | 9.9 | -46 | 255000 | 140000 | 1.8 |
| Katalysator C | 34.1 | 46.6 | 44.1 | 9.3 | -48 | 254000 | 138000 | 1.8 |
| Katalysator D | 31.3 | 48.3 | 42 | 9.7 | -46 | 227000 | 117000 | 1.9 |
| Katalysator E | 45.9 | 48.4 | 42.7 | 8.9 | -47 | 254000 | 128000 | 2.0 |
| Katalysator F | 46.2 | 48.1 | 43 | 9 | -48 | 239000 | 115500 | 2.1 |
| Katalysator G | 33.9 | 46.9 | 42.8 | 10.3 | -45 | 227000 | 110000 | 2.1 |

Die durchgeführten Versuche zeigen klar, das die Vanadium-Imidoaryl-Katalysatoren D, E, F und G mit elektronenziehenden Gruppen am Arylrest (hier o,o,p-Chloro bzw. o,o,p-Bromo) auch in der EPDM-Synthese im Gegensatz zu den in EP-A2-0518 415 beschriebenen Komplexen deutlich höhere katalytische Aktivitäten zeigen als VOCl₃.

Der Vergleich der Versuchsergebnisse der Katalysatoren A und D, B und E sowie C und F zeigt klar, das die Vanadium-Imidoaryl-Katalysatoren D,E und F mit stark elektronenziehenden Gruppen (hier o,o,p-Cl) am Arylrest unabhängig von der Struktur der restlichen Substituenten auch bei der EPDM Herstellung deutlich mehr Polymer ergeben als die in EP-A1-0523 098 und WO-94/14854-A1 beschriebenen alkyl-substituierten Analoga A,B und C.

### Beispiel 19:

### Synthese von (2,4,6-I₃Ph)-N=VCl₃ - Katalysator H

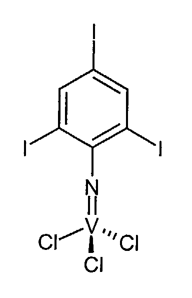

23,54 g 2,4,6-Triiodanilin (0.05 mol) wurden in 20 ml Benzol gelöst, mit 11,9 g SOCl₂ (0.1mol) bei 25°C versetzt und 6 h refluxiert. Nach Abklingen der HCl Entwicklung (6 h) wurden sämtliche bei 40°C/10-2 mbar flüchtigen Anteile entfernt. Das zurückbleibende orange-rote 2,4,6-Triiodphenylsulfinylamin erstarrt beim Abkühlen auf Raumtemperatur zu einer kristallinen Masse.
C: 14.83 (ber. 14.39); H: 0.61 (ber. 0.40); N: 2.75 (ber. 2.80)
EI-MS: m/z = 517 (M⁺).

Das Rohprodukt wird ohne weitere Reinigung eingesetzt. Zu 4,66 g (9,02 mmol) des 2,4,6-Triiodophenylsulfinylamins gelöst in 20 ml Toluol wird ein Gemisch aus 0,86 ml (9,06 mmol) VOCl₃ und 20 ml Toloul getropft. Die Lösung verfärbt sich in einigen Minuten nach dunkelgrün. Nach weiteren 60 min Rühren wird das Lösungsmittel in Vakuum abgezogen. Der Rückstand wird in 80 ml n-Pentan aufgenommen und über Nacht bei -78°C aufbewahrt. Das Produkt fällt als dunkelgrüner Feststoff aus. Nach dem Filtrieren wird das Produkt im Vakuum getrocknet.
Ausbeute: 4.40 g (78 %)
C: 11.44 (ber. 11.51); H: 0.62 (ber. 0.32); N: 2.25 (ber. 2.24)
¹H-NMR: (200MHz, C₆D₆): 7.50 (s, 2H, Ar-H) ppm.

### Beispiel 20 (Vergleichsbeispiel):

### Synthese von (2,4,6-Br₃Ph)-N=V(NtBuCH₂CH₂NtBu)Cl - Katalysator I

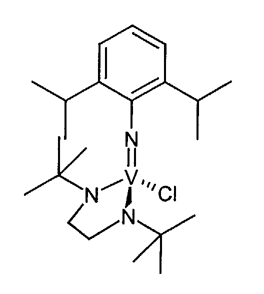

[(Li(THF₂)₂)(tBuNC₂H₂NtBu)] wird gemäß Literaturvorschrift (H. Görls, B. Neumüller, A. Scholz, J. Scholz, Angew. Chem. Vol. 107 (1995), 732-735 nach S. 734, rechte Spalte, in Fußnote 6b) hergestellt. (2,6-iPr₂Ph)-N=VCl₃ wird wie in Beispiel 1 hergestellt.

601 mg (1,81 mmol) (2,6-iPr₂Ph)-N=VCl₃ und 583 mg (1,24 mmol) [(Li(THF₂)₂)(tBuNC₂H₂NtBu)] werden in je 20 ml Diethylether gelöst und die Lösungen bei -30°C vereinigt. Nach einer Stunde Rühren bei Raumtemperatur werden die Nebenprodukte abfiltriert, das Lösungsmittel abgezogen, die Substanz getrocknet und erneut in n-Pentan gelöst und bei -78°C als Öl abgeschieden.
Ausbeute: 368 mg (51 %)
¹H-NMR: (200MHz, CDCl₃): 1,18 (s, 18H, CH₃),1,22 (d, 12H, CH₃), 2,86 (sep, 2H,
sp³-CH), 6,73 (t, 2H, Ar-H),6,97 (d, 1H, Ar-H),7,87 (s, 2H, sp²-CH) ppm
IR-Spektrum (in Nujol): 3407 w, 2959 vs, 2926 vs, 2857 vs, 2361 w, 2344 w, 1630 m, 1422 w, 1364 m, 1339 m, 1290 w, 1262 s, 1215 m, 1098 s, 1022 s, 990 w, 934 w, 866 w, 806 s, 770 m, 752 m, 729 w, 669 w, 432 vs, 413 vs.

### Beispiel 21:

### Synthese von (2,4,6-Cl₃Ph)-N=V(NtBuCH₂CH₂NtBu)Cl - Katalysator K

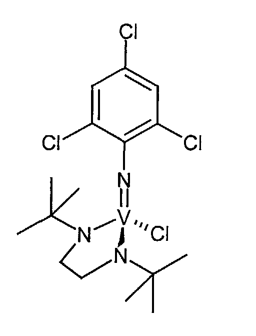

[(Li(THF₂)₂)(tBuNC₂H₂NtBu)] wird gemäß Beispiel 20 hergestellt.
(2,4,6-Cl₃Ph)-N=VCl₃ wird gemäß Beispiel 11 hergestellt.

300 mg (0,85 mmol) (2,4,6-Cl₃Ph)-N=VCl₃ und 400 mg (0,85 mmol) [(Li(THF)₂)₂(tBuNC₂H₂NtBu)] werden in je 20 ml Diethylether gelöst. Beide Lösungen werden abgekühlt, bei -50°C vereint und unter Rühren bis zur Raumtemperatur erwärmt. Nach Abfiltrieren des LiCl und Abtrennen des Lösungsmittels erhält man ein rotbraunes Öl. Dieses wird zweimal mit 20 ml n-Pentan extrahiert. Das Filtrat wird bei -78°C aufbewahrt. Das Produkt wird als dunkelbraunes Öl erhalten und im Vakuum von Lösungsmittelresten befreit.
Ausbeute: 200 mg (52 %)
¹H-NMR: (200MHz, CDCl₃):1,19 (s, 18H, CH₃), 7,13 (d, 2H, Ar-H), 7,87 (s, 2H, sp²-CH) ppm.
¹³C-NMR: (50MHz, CDCl₃): 28,38 (CH₃), 30,02 (CH₃), 57,18 (sp²C),126,59 (Ar),156,90 (Ar-Cl) ppm
IR-Spektrum (in Nujol): 3402 w, 2901 vs, 2724 w, 2361 w, 2344 w, 1630 m, 1559 w, 1298 m, 1262 m, 1211 w, 1098 m, 1022 m, 934 w, 858 m, 802 m, 723 m, 669 w, 428 vs, 401 vs

### Beispiel 22:

### Synthese von (2,4,6-Br₃Ph)-N=V(NtBuCH₂CH₂NtBu)Cl - Katalysator L

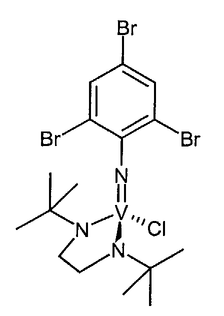

[(Li(THF₂)₂)(tBuNC₂H₂NtBu)] wird gemäß Beispiel 20 hergestellt.
(2,4,6-Br₃Ph)-N=VCl₃ wird gemäß Beispiel 14 hergestellt.

Ein Gemisch aus 601 mg (1,24 mmol) (2,4,6-Br₃Ph)-N=VCl₃ und 583 mg (1,24 mmol) [(Li(THF₂)₂)(tBuNC₂H₂NtBu)] wird unter Kühlung mit 30 ml Diethylether (-30°C) versetzt. Man lässt die orange-braune Lösung unter Rühren auf Raumtemperatur erwärmen. Anschließend wird das Lösungsmittel abgezogen und man erhält ein rotbraunes Öl. Der Rückstand wird mit n-Pentan extrahiert und bei -78°C zum Auskristallisieren aufbewahrt. Das Produkt wird als dunkelbraunes Öl erhalten.
Ausbeute: 368 mg (51 %)
C: 32.06 (ber. 32.99); H: 3.62 (ber. 3.81); N: 7.00 (ber. 7.26)
¹H-NMR: (200MHz, CDCl₃): 1,21 (s, 18H, CH₃), 7,12; (s, 2H, Ar-H), 8,01 (s, 2H, sp²-CH)
¹³C-NMR: (50MHz, CDCl₃): 31,28 (sp³-C),159,61 (Ar-Br) ppm
IR-Spektrum (in Nujol) 2928 vs, 2724 w, 2361 w, 2344 w, 1632 s, 1362 s, 1337 w, 1260 m, 1213 s, 1098 m, 1026 m, 934 w, 878 w, 858 w, 806 m, 774 m, 747 m

### Beispiel 23:

### Synthese von (2,4,6-Cl₃Ph)-N=V[CHMe(3,5-tBu₂Ph-O)₂]Cl - Katalysator M

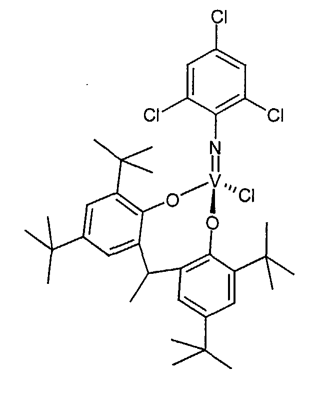

(2,4,6-Cl₃Ph)-N=VCl₃ wird gemäß Beispiel 11 synthetisiert.

0,80 g (2,27 mmol) (2,4,6-Cl₃Ph)-N=VCl₃ werden in 40 ml n-Hexan gelöst und bei -30°C mit einer Lösung von 1,00 g (2,27 mmol) 1,1-Bis(3,5-di-tert-butyl-2-hydroxyphenyl)ethan in 40 ml n-Hexan versetzt, wobei eine sofortige Violettfärbung der Lösung zu beobachten ist. Es wird weitere 18 h gerührt. Nach Abziehen des Lösungsmittels wird der Rückstand mit Pentan gewaschen und anschließend im Vakuum getrocknet.
Ausbeute: 1,38 g (85 %)
¹H-NMR: (300MHz, CDCl₃): 1.30 (s, 18H, C(CH₃)₃), 1.44 (s, 18H, C(CH₃)₃), 1.75 (d, 3H, CH₃, ³J(HH)=6.84 Hz), 4.85 (q, ³J(HH)= 6.87Hz, 1 H, CH-CH₃), 7.08-7.38(m 6H, Ar-H) ppm

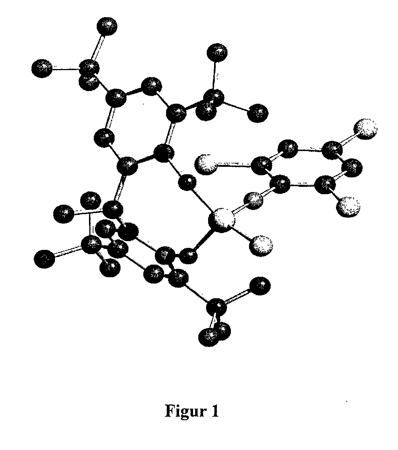

Durch mehrtägiges Aufbewahren einer gesättigten Lösung in Pentan bei -30°C lassen sich Einkristalle der violetter Verbindung gewinnen. Von der Verbindung konnte eine Röntgenstrukturanalyse angefertigt werden (Figur 1).

### Beispiel 24:

### Synthese von (2,4,6-Cl₃Ph)-N=V[CH₂(2-tBu,4-Me-Ph-O)₂]Cl - Katalysator N

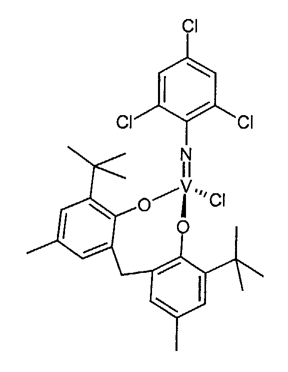

(2,4,6-Cl₃Ph)-N=VCl₃ wird gemäß Beispiel 11 synthetisiert.

0,72 g (2,05 mmol) (2,4,6-Cl₃Ph)-N=VCl₃ werden in 50 ml Toluol gelöst und bei Raumtemperatur mit einer Lösung von 0,70 g (2,07 mmol) 2,2-Methylenbis(6-tertbutyl-4-methyl-phenol) in 50 ml Toluol versetzt, wobei eine sofortige Violettfärbung der Lösung zu beobachten ist. Es werden weitere 18 h gerührt. Nach Abziehen des Lösungsmittels wird die Substanz in 100 ml Pentan gelöst und abfiltriert. Das violette Produkt wird bei -30°C auskristallisiert.
Ausbeute: 1.04 g (82 %)
¹H-NMR: (200MHz, CDCl₃): 1,37 (s, 18H, C(CH₃)₃, 2.23 (s, 6H, CH₃), 4,59(m, 2H, CH₂), 7.17(m 6H, Ar-H) ppm
IR-Spektrum (in Nujol): 3400 w, 3350 m, 3179 w, 2930 s, 2870 s, 2729 m, 2683 w, 2376 m, 2340 w, 2050 m, 2026 w, 1623 w, 1590 s, 1540 w, 1518 w, 1302 m, 1281 w, 1268 m, 1219 m, 1170 w, 1165 w, 1100 m, 1075 w, 1024 w, 1000 m, 978 w, 930 w, 909 m, 891 w, 870 m, 851 w, 833 1, 800 m, 776 m, 760 w, 721 s, 678 w, 660 m, 423 m, 412 m.

### Beispiel 25:

### Synthese von (2,4,6-Cl₃Ph)-N=V[CH₂(2-tBu,4-Me-Ph-O)₂]Cl - Katalysator O

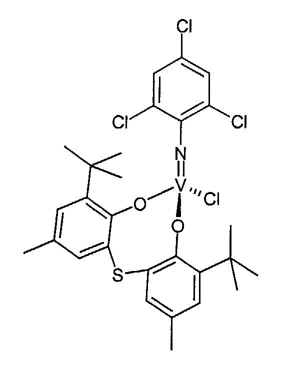

(2,4,6-Cl₃Ph)-N=VCl₃ wird gemäß Beispiel 11 synthetisiert.

Ein Gemisch von 0,51 g (1,45 mmol) (2,4,6-Cl₃Ph)-N=VCl₃ und 0,50 g 3-tert.-butyl-2-hydroxy-5-methylphenylsulfid (1.45 mmol) wird bei Raumtemperatur mit 60 ml Toluol versetzt. Es wird 18 h gerührt. Nach Abziehen des Lösungsmittels wird der dunkelrote Rückstand mit Pentan gewaschen und anschließend im Vakuum getrocknet.
Ausbeute: 0,72 g (78 %)
¹H-NMR: (300MHz, CDCl₃): 1.30 (s, 18H, C(CH₃)₃), 2.25 (s, 6H, CH₃), 716 (m 6H, Ar-H) ppm

### Beispiel 26:

### Ethen/Propen Copolymerisation

Die mit einem Thermostaten auf 40°C temperierte Apparatur wird 30 min auf 5 * 10⁻² evakuiert. Danach wird bis zu einem Druck von 1,5 bar nachgereinigtes Propen aufgepresst. Im Propengegenstrom werden 40 ml absolutiertes Hexan und 0,408 mmol (18,5 eq) einer 15 %igen Lösung von Ethylaluminiumsesquichlorid in Heptan in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethyester zu befüllen.

Darauf werden 0,022 mmol (1,0 eq) der in 30 ml Hexan gelösten Vanadiumprecursorverbindung in das Rührgefäß gegeben. Die Hexanlösung wird 15 min mit Propen bei 4,0 bar gesättigt. Nach Verschließen der Propenzufuhr wird der Gesamtdruck mit nachgereinigtem Ethen auf 5,8 bar eingestellt. Die Reaktion wird bei 40°C durch Injektion des Reaktivators mit der Druckspritze gestartet. Es wird unter konstantem Ethendruck bei 5,8 bar und mit 1000 U/min mit einen Ankerrührer gerührt.

Nach 10 min wird die Reaktion durch Eintropfen des Gemisches in salzsaures Methanol beendet. Nach Waschen des Polymerniederschlags mit Ethanol wird dieser 10 h bei 50°C getrocknet und die Ausbeute bestimmt.

**Tabelle 7:**

| **Ergebnisse der Ethen/Propen Copolymerisation durch Vanadium-Imidoaryl-Katalysatoren** | | | | |
|---|---|---|---|---|
| Katalysator | Tmax. [°C] | Ausbeute [g] | E [wt%] | P [wt%] |
| VOCl₃ | 57.3 | 5.1 | 59.9 | 40.1 |
| Katalysator D | 64.2 | 8.2 | 64.1 | 35.9 |
| Katalysator G | 61.7 | 9.6 | | |
| Katalysator H | 64.8 | 6.0 | | |
| Katalysator I | 59.5 | 8.4 | 63.4 | 36.6 |
| Katalysator K | 63.1 | 9.2 | 64.0 | 36.0 |
| Katalysator L | 61.8 | 8.5 | 65.0 | 35.0 |
| Katalysator M | 64.4 | 8.6 | 63.0 | 37.0 |
| Katalysator N | 59.5 | 6.5 | 62.8 | 37.2 |
| Katalysator O | 62.4 | 6.2 | 61.9 | 38.1 |

Die Ergebnisse zeigen, das auch erfindungsgemäße Vanadium-Imidoaryl-Katalysatoren, die neben der Imidogruppe chelatisierende Liganden am Vanadium tragen (K, L, M, N, O) vorteilhaft für die Ethen/Propen Copolymerisation eingesetzt werden können. Sie sind aktiver als VOCl₃, das den Stand der Technik repräsentiert und, wie der Vergleich Versuchsergebnisse für die Katalysatoren K und L mit dem für Katalysator I zeigt, auch aktiver als Vanadium-Imidoaryl-Katalysatoren, die keine elektronenziehenden Substituenten tragen.

## Patentansprüche

1. Vanadium-Imidoaryl-Verbindungen mit elektronenziehenden Substituenten an der Arylgruppe.

2. Verbindungen gemäss Anspruch 1, welche der allgemeinen Formel R-N=VCl₃ (I) oder R-N=VXYZ (II) genügen,
wobei R für eine einen oder mehrere elektronenziehenden Substituenten tragende Arylgruppe steht,
wobei X,Y,Z unabhängig voneinander verschiedene oder gleichartige monoanionische Liganden sind, die miteinander und/oder mit der Arylgruppe des Imids, bzw. dessen Substituenten verbunden sein können.

3. Verbindungen gemäss Anspruch 1 oder 2, **dadurch gekennzeichnet, dass** sie einer der folgenden Strukturen entsprechen 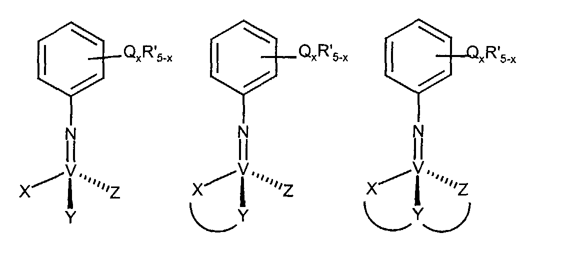 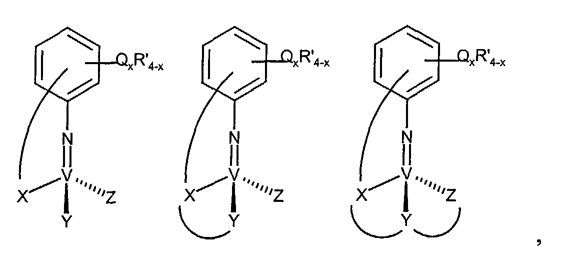 wobei Q für besagte elektronenziehende(n) Gruppe(n) und R' weitere Substituenten der Arylgruppe darstellen, die ausgewählt werden aus der Gruppe bestehend aus Wasserstoff, Halogen-, Nitro-, C₁-C₁₀-Alkoxy-, C₁-C₁₀-Alkyl-, C₆-C₁₄-Cycloalkyl oder C₆-C₁₄-Aryl.

4. Verbindungen gemäss einem der Ansprüche 1-3, **dadurch gekennzeichnet, dass** als elektronenziehende Gruppe(n) eine oder mehrere Verbindungen der Gruppe Halogen-, halogenierte Alkylgruppen, Nitro-, Cyano-, Carbonyl- und Carboxylgruppen verwendet werden.

5. Zusammensetzungen enthaltend Vanadium-Imidoaryl-Verbindungen mit elektronenziehenden Substituenten an der Arylgruppe und eine organo-metallische Verbindung der Gruppen 1, 2, 12 oder 13 des Periodensystems der Elemente gemäss IUPAC 1985, wobei in besagter organo-metallischer Verbindung mindestens eine Kohlenwasserstoffgruppe hierbei direkt über ein Kohlenstoffatom an das Metallatom gebunden ist.

6. Zusammensetzung gemäss Anspruch 5, **dadurch gekennzeichnet, dass** sie als Vanadium-Imidoaryl-Verbindungen eine Verbindung gemäss einem der Ansprüche 1-4 und als organo-metallische Verbindung eine Verbindung des Aluminiums, Natriums, Lithiums, Zinks oder Magnesiums enthalten.

7. Verwendung einer Zusammensetzung gemäss Anspruch 5 oder 6 als Katalysator.

8. Katalysator für die Polymerisation von Olefinen, enthaltend eine Zusammensetzung gemäß Anspruch 5 oder 6 oder eine Verbindung gemäss Anspruch 1.

9. Katalysator gemäss Anspruch 8, **dadurch gekennzeichnet, dass** zusätzlich eine Verbindung aus der Gruppe halogenhaltige Verbindungen, halogenhaltige Kohlenwasserstoffe, Lewis Säuren oder Lewis Basen und Gemische aus zwei oder mehreren dieser Stoffe enthalten ist.

10. Verfahren zur Homo- oder Co-Polymerisation von Olefinen gegebenenfalls mit einem oder mehreren Dienen, **dadurch gekennzeichnet, dass** in Gegenwart eines Katalysators gemäss Anspruch 8 oder 9 polymerisiert wird.

11. Verfahren zur Homo- oder Co-Polymerisation von Olefinen gegebenenfalls mit einem oder mehreren Dienen, **dadurch gekennzeichnet, dass** in Gegenwart einer Verbindung gemäss Anspruch 1 oder einer Zusammensetzung gemäss Anspruch 5 polymerisiert wird.
